# EUROPÄISCHE PATENTSCHRIFT

(11) **EP 2 669 221 B1**
(45) Veröffentlichungstag und Bekanntmachung des Hinweises auf die Patenterteilung: **08.07.2015**
(21) Anmeldenummer: 13169608.0
(22) Anmeldetag: 29.05.2013
(51) Int. Cl.: B65G 43/00, B65G 47/64

(54) **Transportvorrichtung mit einer Magnetkupplung**
Transport device with a magnetic coupling
Dispositif de transport doté d'un embrayage magnétique

(30) Priorität: 01.06.2012 DE 102012010802
(43) Veröffentlichungstag der Anmeldung: 04.12.2013
(73) Patentinhaber: GEA Food Solutions Germany GmbH, 35216 Biedenkopf-Wallau (DE)
(72) Erfinder: Gahler, Thomas, 87657 Goerisried (DE)
(74) Vertreter: Wolff, Felix

(56) Entgegenhaltungen:
- EP-A1- 0 317 078
- DE-A1-102004 008 330
- DE-A1-102009 039 826

## Beschreibung

Die vorliegende Erfindung betrifft eine Transportvorrichtung mit einem ersten und mindestens einem zweiten Transportband und einer beweglichen Weiche, die einen Produktstrom auf das erste und/oder zweite Transportband leitet.

Die gattungsgemäßen Transportvorrichtungen sind aus dem Stand der Technik, beispielsweise der DE 10 2009 039 826 A1 hinlänglich bekannt und werden beispielsweise dazu eingesetzt Produkte zwischenzulagern und/oder Portionen, die aus mehreren Einzelstücken bestehen, und/oder Format zu komplettieren. Dabei wird eine Weiche, insbesondere eine Wippe, die vorzugsweise ebenfalls ein Transportmittel aufweist, zwischen den Transportbändern hin- und her-bewegt, um bedarfsweise einem der Transportbänder Produkte zuzuleiten oder davon weg zu transportieren. Insbesondere wenn sich die Wippe auf eines der Transportbänder zubewegt, besteht für das Bedienpersonal eine erhöhte Unfallgefahr. Weiterer Stand der Technik ist die DE 10 2004 008 330 A1.

Es war deshalb die Aufgabe der vorliegenden Erfindung eine Transportvorrichtung zur Verfügung zu stellen, die die Nachteile des Standes der Technik nicht aufweist.

Gelöst wird die Aufgabe mit einer Transportvorrichtung gemäß Patentanspruch 1.

Die zu diesem Gegenstand der vorliegenden Erfindung gemachten Ausführungen gelten für die anderen Gegenstände der vorliegenden Erfindung ebenfalls und umgekehrt.

Die vorliegende Erfindung betrifft eine Transportvorrichtung mit einem ersten und mindestens einem weiteren Transportband. Diese Transportbänder können beispielsweise übereinander oder nebeneinander vorgesehen sein. Zwischen den Transportbändern befindet sich eine Weiche, beispielsweise eine Wippe, die einen ankommenden Produktstrom auf das erste und/oder das weitere Transportband leitet. Die erfindungsgemäße Transportvorrichtung kann eine zweite Weiche aufweisen, die die Produkte von den Transportbändern wieder weg leitet. Jede Weiche ist erfindungsgemäß mit einem Antrieb versehen, der sie zwischen den beiden Transportbändern hin- und her-bewegt.

Erfindungsgemäß weist die Transportvorrichtung nun eine Sollöffnungsstelle, vorzugsweise eine reversible Sollöffnungsstelle auf, d.h. eine Sollöffnungsstelle, die leicht wieder reparabel ist, insbesondere eine Sollöffnungsstelle, die selbstreparierend ist, auf. Durch die Sollöffnungsstelle werden zwei Teile voneinander getrennt. Durch diese Sollöffnungsstelle wird verhindert, dass bei einer Überlast der Weiche, beispielsweise beim Auftreffen der Weiche auf ein Hindernis, das Bedienpersonal verletzt wird und/oder ein Sachschaden an einem der Transportbänder oder der Weiche entsteht.

Ein Überlastfall im Sinne der Erfindung tritt dann auf, wenn über das übliche, betriebsmäßige Maß hinausgehende Kräfte und/oder Momente benötigt werden, um beispielsweise die Weiche zu bewegen. Derartige Überlastfälle treten beispielsweise auf, wenn die Weiche auf ein Hindernis trifft.

Erfindungsgemäß ist die Sollöffnungsstelle eine Magnetkupplung. Bei einer Überlast werden die magnetisch miteinander verbundenen Teile der Magnetkupplung der erfindungsgemäßen Transportvorrichtung voneinander getrennt. Sobald die Überlast wieder wegfällt, können diese Teile wieder zusammengefügt werden und sind durch die magnetischen Kräfte wieder verbunden und die Transportvorrichtung ist wieder vollständig einsatzfähig. Insbesondere ist die Magnetkupplung selbstreparierend. Die Magnetkupplung ist ein Beispiel für eine reversible Sollöffnungsstelle. Vorzugsweise weist die Magnetkupplung mindestens einen, vorzugsweise zwei Magnete auf, die im Überlastfall voneinander getrennt werden.

Erfindungsgemäß ist die Weiche mehrteilig vorgesehen und weist einen Basisteil und einen vorderen, den Transportbändern zugewandten Abschnitt auf, der relativ zu dem Basisteil beweglich, vorzugsweise drehbar, vorgesehen ist. Erfindungsgemäß ist die Sollöffnungsstelle zwischen diesem vorderen Abschnitt und der Weiche angeordnet. Dadurch kann beispielsweise sicher verhindert werden, dass sich das Bedienpersonal die Finger zwischen der Weiche und einem der Transportbänder einklemmt und/oder dass die Weiche oder deren Antrieb beschädigt wird.

Vorzugsweise ist die Sollöffnungsstelle bei Wegfall der Überlast selbstfügend, d.h. selbstreparierend. Selbstfügend/selbstreparierend im Sinne der Erfindung bedeutet, dass sich die Teile der Sollöffnungsstelle, die sich bei dem Überlastfall getrennt haben, selbsttätig wieder miteinander verbinden und die erfindungsgemäße Transportvorrichtung somit ihre volle Funktionsfähigkeit wiedergewinnt. Diese bevorzugte Ausführungsform der vorliegenden Erfindung hat den Vorteil, dass die Sollöffnungsstelle sich selbst repariert sobald das Hindernis weggefallen ist.

Vorzugsweise weist die Transportvorrichtung einen Sensor auf, der das Ansprechen der Sollöffnungsstelle erkennt. Dieser Sensor sendet ein Signal an eine Steuereinheit, so dass diese erkennt, dass die Transportvorrichtung nicht einsatzfähig ist. Sobald die Sollöffnungsstelle wieder repariert ist, entfällt das Signal des Sensors und die Transportvorrichtung kann weiterbetrieben werden.

Ein weiterer Gegenstand der vorliegenden Erfindung ist ein Verfahren gemäß Patentanspruch 6.

Die zu diesem Gegenstand der vorliegenden Erfindung gemachten Ausführungen gelten für die anderen Gegenstände der vorliegenden Erfindung ebenfalls und umgekehrt.

Das erfindungsgemäße Verfahren hat den Vorteil, dass sich die Sollöffnungsstelle selbst repariert sobald das Hindernis weggefallen ist.

Vorzugsweise bringt die Schwerkraft die beiden Elemente nach deren Trennung wieder zusammen. Sobald das Hindernis, das zu dem Überlastfall geführt hat, entfernt ist, bewegt sich ein Teil der Sollöffnungsstelle bedingt durch die Schwerkraft, auf das andere zu, wodurch die beiden Teile der Sollöffnungsstelle wieder zusammengefügt werden.

Im Folgenden werden die Erfindungen anhand der Figuren 1 bis 5 erläutert. Diese Erläuterungen sind lediglich beispielhaft und schränken den allgemeinen Erfindungsgedanken nicht ein.
- Figur 1: zeigt die erfindungsgemäße Transportvorrichtung.
- Figur 2: zeigt eine nicht erfindungsgemäße Ausführungsform einer Weiche.
- Figuren 3-5: zeigen eine erfindungsgemäße Ausführungsform der Weiche.

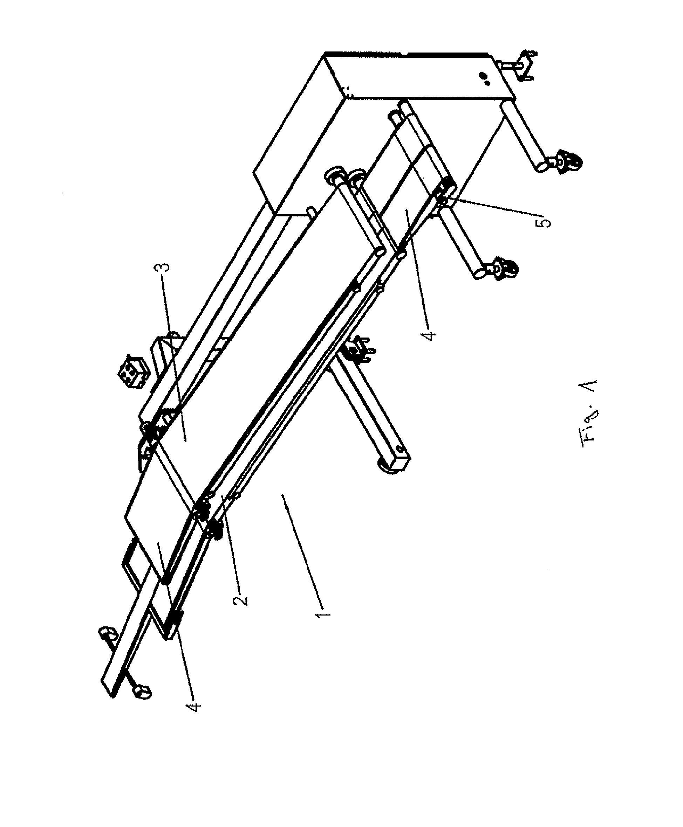

Figur 1 zeigt die erfindungsgemäße Transportvorrichtung 1. Diese weist ein erstes und ein zweites Transportband 2, 3 auf, die in dem vorliegenden Fall übereinander angeordnet sind. Der Fachmann erkennt, dass die Transportvorrichtung auch mehr als zwei Transportbänder aufweisen kann. Jedes Transportband 2, 3 weist vorzugsweise ein angetriebenes Endlosband oder angetriebene Endlosriemen auf, die jeweils vorzugsweise um mindestens zwei Rollen umlaufen. Vorzugsweise ist mindestens eine der Rollen angetrieben. Zwischen den beiden Transportbändern 2, 3 befindet sich eine Weiche 4, mit der es möglich ist, einen ankommenden Produktstrom (nicht dargestellt) auf das untere und/oder das obere Transportband 2, 3 zuleiten. Ein Aufteilen des ankommenden Produktstroms ist beispielsweise wünschenswert, um Produkte auszuschleusen und/oder auf einem der Transportbänder zwischenzulagern. In dem vorliegenden Fall ist die Weiche 4 um ein Drehgelenk 5 drehbar vorgesehen. Wie anhand von Figur 1 dargestellt, kann die erfindungsgemäße Transportvorrichtung 1 eine weitere Weiche 4 aufweisen, die es in dem vorliegenden Fall ermöglicht, Produkte von dem Transportband 3 auf das Transportband 2 zu transferieren. Jede Weiche 4 weist vorzugsweise ein angetriebenes Endlosband oder angetriebene Riemen auf, die vorzugsweise um mindestens zwei Rollen umlaufen. Vorzugsweise ist eine der Rollen angetrieben.

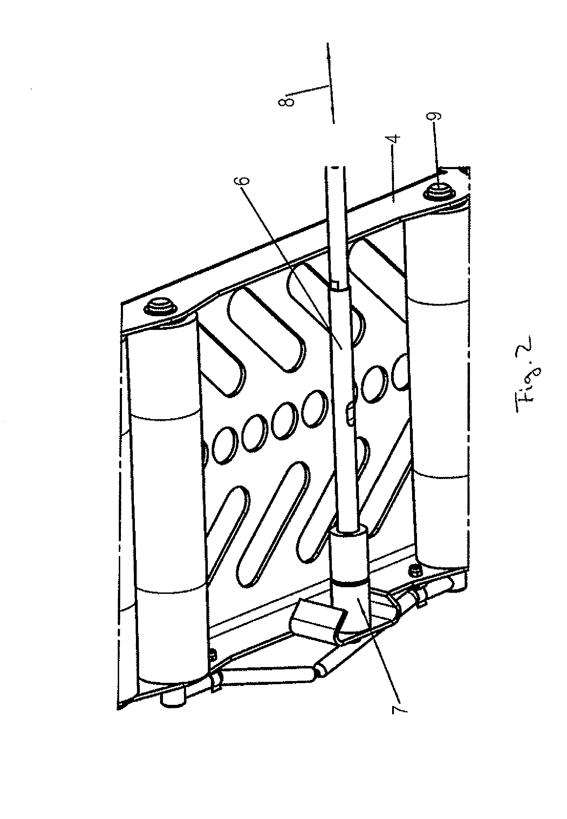

Figur 2 zeigt eine nicht erfindungsgemäße Ausführungsform einer Weiche 4. In dem vorliegenden Fall ist die Weiche 4 längsverschiedentlich an mindestens einem Axiallager 9 vorgesehen. Die Bewegung der Weiche 4 ist durch den Doppelpfeil 8 symbolisiert. Eine derartige Weiche eignet sich insbesondere für nebeneinanderliegende Transportbänder 2, 3. Die Bewegung der Weiche 4 erfolgt in dem vorliegenden Fall durch einen Antrieb (nicht dargestellt), der beispielsweise einen Kolben 6 aufweist, der die Weiche nach rechts und nach links bewegt. An diesem Kolben ist hier die Sollöffnungsstelle 7, in dem vorliegenden Fall in Form von zwei Permanentmagneten, vorgesehen. Wird nun die Kraft, die benötigt wird, um die Weiche 4 von links nach rechts zu bewegen zu groß, lösen sich die beiden Permanentmagnete voneinander und die Weiche 4 wird nicht weiter bewegt. Dadurch kann eine Verletzung eines Bedieners der Transportvorrichtung und/oder ein Sachschaden an der Weiche 4 oder an einem der Transportbänder 2, 3 sicher verhindert werden. Sobald sich dann der Kolben 6 wieder von links nach rechts bewegt, gelangen die beiden Teile, hier der Permanentmagneten, der Sollöffnungsstelle 7 wieder in Anlage zueinander, so dass die Sollöffnungsstelle wieder repariert ist und die Weiche 4 wieder ordnungsgemäß betrieben werden kann. Dadurch entsteht nur ein minimaler Produktionsausfall der Transportvorrichtung 1.

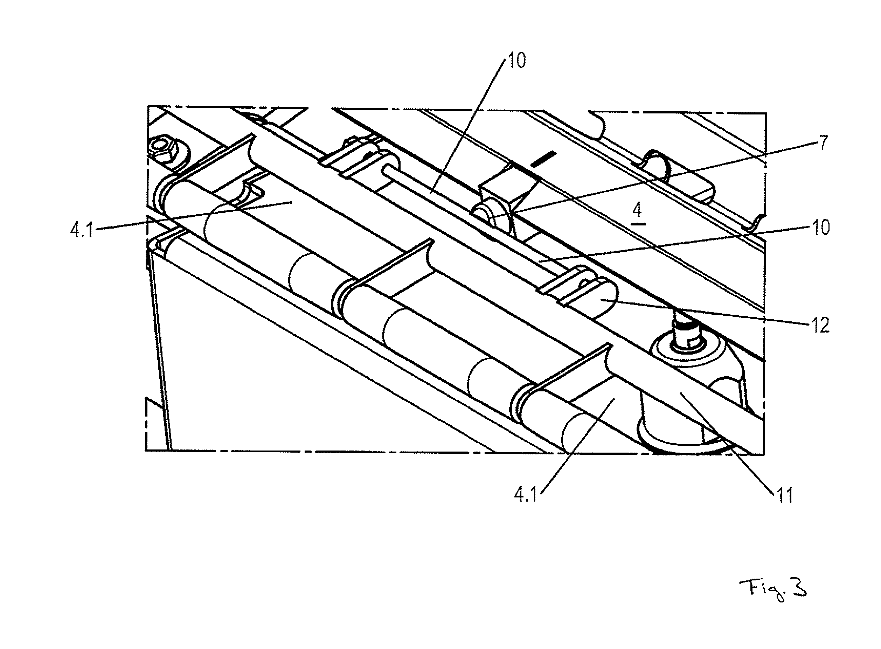

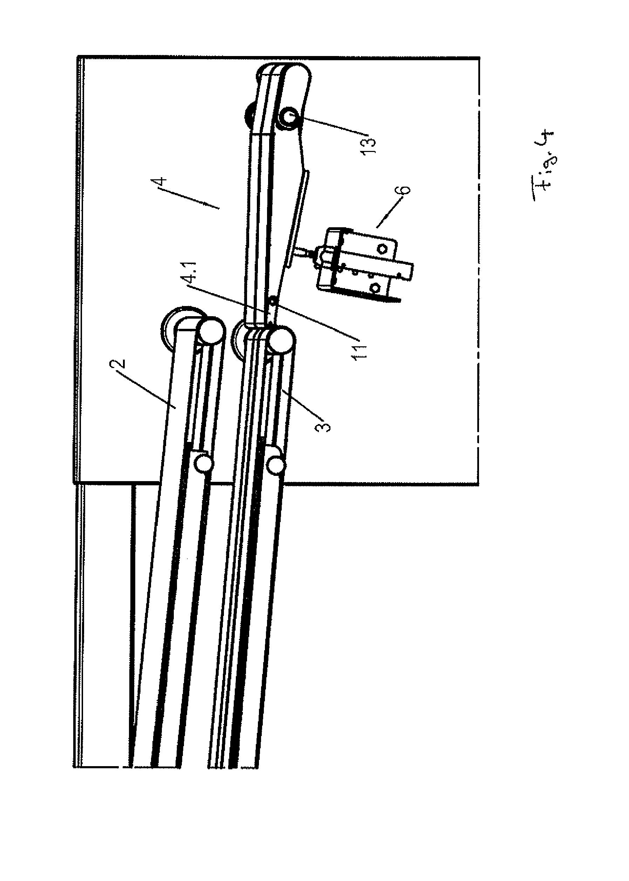

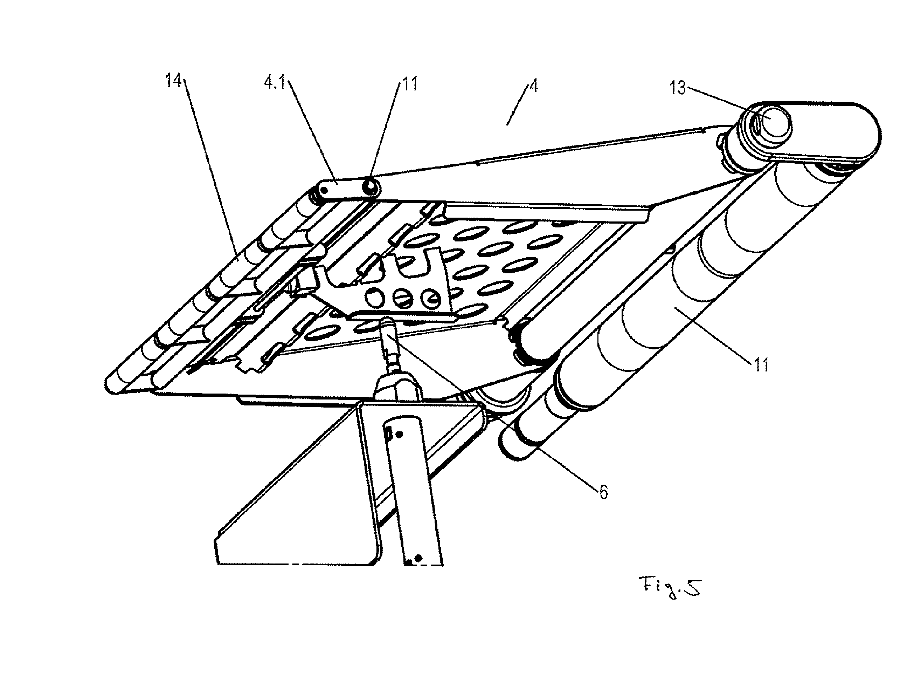

In den Figuren 3-5 ist eine Ausführungsform der Weiche 4 der erfindungsgemäßen Transportvorrichtung 1 dargestellt. Wie insbesondere Figur 4 entnommen werden kann, ist in dem vorliegenden Fall, die Weiche 4 drehbar um ein Drehlager 13 vorgesehen, um einen ankommenden Produktstrom auf das Transportband 3 und/oder das Transportband 2 zu leiten. Die Weiche 4 wird in dem vorliegenden Fall durch den Antrieb 6, hier ein Linearantrieb, drehend im und gegen den Uhrzeigersinn angetrieben. In dem vorliegenden Fall weist die Weiche 4 an ihrem den Transportbändern zugewandten, vorderen Ende ein bewegliches Bauteil 4.1 auf, das um eine Drehachse 11, die an dem Basisteil der Weiche 4 vorgesehen ist, drehbar gelagert ist. Details dieser Lagerung sind insbesondere in Figur 3 zu sehen. Es ist deutlich zu erkennen, dass das vordere Ende 4.1 der Weiche 4 um das Drehlager 11 drehbar gelagert ist. Des Weiteren ist zu erkennen, dass die Weiche 4 in dem vorliegenden Fall zweiteilig vorgesehen ist. Die Trennung der beiden Teile verläuft in einem 90° Winkel zu der Drehachse 13. Jedes Teil der Weiche 4 kann einzeln oder die beiden Teile können gemeinsam um die Drehachse 13 gedreht werden. Jedes vordere Ende 4.1 der Weiche 4 ist mit einem Sicherungsmittel 10 an dem Basisteil der Weiche 4 individuell gesichert, das verhindert, dass sich das vordere Ende 4.1 selbsttätig relativ zu dem Basisteil der Weiche 4 dreht. Lediglich im Falle einer Überlast soll sich das vordere Ende 4.1 relativ zu dem Basisteil 4.1 der Weiche 4 drehen. Dafür ist zwischen den beiden Sicherungsstiften ein an dem Basisteil der Weiche 4 montierter Permanentmagnet vorgesehen, der verhindert, dass sich, unter Betriebsbelastungen, das vordere Ende 4.1 relativ zu dem Basisteil bewegt. Der Kraftschluß zwischen dem Permanentmagnet und dem jeweiligen Sicherungsmittel stellt die Sollöffnungsstelle dar. In dem vorliegenden Fall ist ein Permanentmagnet für beide Sicherungsstifte 10 vorgesehen. Der Fachmann versteht, dass auch jedes Sicherungsmittel einen eignen Permanentmagneten aufweisen kann. Bei einem Überlastfall löst sich das Sicherungsmittel von dem Permanentmagneten und das vordere Ende 4.1 kann sich relativ zu dem Basisteil der Weiche drehen. Dadurch werden Personen- und/oder Sachbeschädigungen vermieden. Sobald die Überlast beseitigt ist, wird das Sicherungsmittel, beispielsweise durch die Einwirkung der Schwerkraft auf das vordere Ende 4.1, wieder mit dem Permanentmagnet verbunden und eine ordnungsgemäße Funktion der Weiche ist wiederhergestellt. Die Sollöffnungsstelle funktioniert bei Überlast in beide Drehrichtungen.

### Bezugszeichenliste:

- 1: Transportvorrichtung
- 2: erstes Transportband
- 3: zweites Transportband
- 4: Weiche, Bauteil
- 4.1: vorderes Ende der Weiche, vorderes Ende des Bauteils
- 5: Drehlager der Weiche
- 6: Antrieb
- 7: Reversible Sollöffnungsstelle, Magnetkupplung
- 8: Bewegungsrichtung
- 9: Axiallager
- 10: Sicherungsmittel, Sicherungsstift
- 11: Drehlager des vorderen Endes 4.1
- 12: Lager des Sicherungsmittels
- 13: Drehlager der Weiche
- 14: Rolle

## Patentansprüche

1. Transportvorrichtung (1) mit einem ersten und mindestens einem weiteren Transportband (2, 3) und einer beweglichen Weiche (4), die einen Antrieb (6) aufweist und einen Produktstrom auf das erste und/oder das weitere Transportband (2, 3) oder davon weg leitet, **dadurch gekennzeichnet, dass** die Weiche eine vorzugsweise reversible Sollöffnungsstelle (7) aufweist, die bei Überlast einen Personen- und/oder Sachschaden verhindert, wobei die Sollöffnungsstelle eine Magnetkupplung ist und die Weiche (4) einen vorderen Abschnitt (4.1) aufweist, der an der Weiche beweglich vorgesehen ist und die Sollöffnungsstelle (7) zwischen dem vorderen Abschnitt (4.1) und der Weiche (4) angeordnet ist

2. Transportvorrichtung (1) nach Anspruch 1, **dadurch gekennzeichnet, dass** die Magnetkupplung mindestens einen, vorzugsweise zwei Magnete aufweist,

3. Transportvorrichtung (1) nach einem der voranstehenden Ansprüche, **dadurch gekennzeichnet, dass** der vordere Abschnitt (4.1) drehbar an der Weiche vorgesehen ist.

4. Transportvorrichtung (1) nach einem der voranstehenden Ansprüche, **dadurch gekennzeichnet dass** die Sollöffnungsstelle (7) bei Wegfall der Überlast selbstfügend ist.

5. Transportvorrichtung (1) nach Anspruch 1, **dadurch gekennzeichnet, dass** ein Sensor vorgesehen ist, der das Ansprechen der Sollöffnungsstelle erkennt.

6. Verfahren zur Sicherung einer Weiche (4) mit einer Sollöffnungsstelle in einer Transportvorrichtung (1) gemäß einem der voranstehenden Ansprüchen, wobei die Sollöffnungsstelle (7) zwei Teile aufweist, die sich bei einer Überlast voneinander trennen um einen Personen- oder Sachschaden zu verhindern, **dadurch gekennzeichnet, dass** sich die beiden Teile bei Wegfall der Überlast wieder kraftschlüssig zusammenfügen.

7. Verfahren nach Anspruch 6, **dadurch gekennzeichnet, dass** die Schwerkraft die beiden Teile nach deren Trennung wieder zusammenbringt.

## Claims

1. Transfer device (1) having a first and at least one further conveyor belt (2, 3) and a moveable switch (4) which has an actuator (6) and which conveys a flow of products on to the first and/or the further conveyor belt (2, 3) or away from it, **characterised in that** the switch has a preferably reversible predetermined opening point (7) which, in the event of an overload, prevents personal injury and/or property damage, wherein the predetermined opening point is a magnetic coupling and the switch (4) has a front section (4.1) provided to be movable on the switch and the predetermined opening point (7) is arranged between the front section (4.1) and the switch (4).

2. Transfer device (1) according to claim 1, **characterised in that** the magnetic coupling has at least one, preferably two magnets.

3. Transfer device (1) according to one of the preceding claims, **characterised in that** the front section (4.1) is arranged on the switch such that it can pivot.

4. Transfer device (1) according to one of the preceding claims, **characterised in that**, once the overload has ceased, the predetermined opening point (7) is self-closing.

5. Transfer device (1) according to claim 1, **characterised in that** a sensor is provided that detects when the predetermined opening point responds.

6. Method for making a switch (4) safe with a predetermined opening point in a transfer device (1) according to one of the preceding claims, wherein the predetermined opening point (7) has two parts that separate from each other in the event of an overload in order to prevent personal injury or property damage, **characterised in that**, once the overload has ceased, the two parts close together again non-positively.

7. Method according to claim 6, **characterised in that**, after parting, the two parts are brought together again under gravity.

## Revendications

1. Dispositif de transport (1) comportant une première et au moins une autre bande transporteuse (2, 3) et un aiguillage mobile (4) qui présente un dispositif d'entraînement (6) et un flux de produits sur la première et/ou l'autre bande transporteuse (2, 3) ou l'en dévie, **caractérisé en ce que** l'aiguillage présente un emplacement d'ouverture nominale (7) de préférence réversible qui prévient les dommages corporels et/ou matériels en cas de surcharge, l'emplacement d'ouverture nominale (7) étant un accouplement magnétique et l'aiguillage (4) présentant un segment avant (4.1) qui est monté de façon mobile sur l'aiguillage et l'emplacement d'ouverture nominale (7) étant disposé entre le segment avant (4.1) et l'aiguillage (4)

2. Dispositif de transport (1) selon la revendication 1, **caractérisé en ce que** l'accouplement magnétique présente au moins un aimant, de préférence deux aimants,

3. Dispositif de transport (1) selon l'une quelconque des revendications précédentes, **caractérisé en ce que** le segment avant (4.1) est monté de façon rotative sur l'aiguillage.

4. Dispositif de transport (1) selon l'une quelconque des revendications précédentes, **caractérisé en ce que** l'emplacement d'ouverture nominale (7) s'auto-assemble en cas de suppression de la surcharge.

5. Dispositif de transport (1) selon la revendication 1, **caractérisé en ce qu'**un capteur est prévu qui détecte la réaction de l'emplacement d'ouverture.

6. Procédé pour sécuriser un aiguillage (4) comportant un emplacement d'ouverture nominale dans un dispositif de transport (1) selon l'une quelconque des revendications précédentes, l'emplacement d'ouverture nominale (7) présentant deux parties qui se séparent en cas de surcharge pour prévenir un dommage corporel ou matériel, **caractérisé en ce que** les deux parties se réunissent à nouveau par verrouillage mécanique en cas de suppression de la surcharge.

7. Procédé selon la revendication 6, **caractérisé en ce que** la force gravitationnelle assemble à nouveau les deux parties après leur séparation.
